# EUROPÄISCHE PATENTSCHRIFT

(11) **EP 1 230 079 B1**
(45) Veröffentlichungstag und Bekanntmachung des Hinweises auf die Patenterteilung: **10.12.2003**
(21) Anmeldenummer: 00956122.6
(22) Anmeldetag: 02.08.2000
(51) Int. Cl.: B29C 49/56, B29C 49/78, B29C 33/20

(54) **VERFAHREN UND VORRICHTUNG ZUR BLASFORMUNG VON BEHÄLTERN**
METHOD AND DEVICE FOR BLOW MOULDING CONTAINERS
PROCEDE ET DISPOSITIF DE FORMAGE PAR SOUFFLAGE DE RECIPIENTS

(30) Priorität: 15.09.1999 DE 19944111
(43) Veröffentlichungstag der Anmeldung: 14.08.2002
(73) Patentinhaber: SIG Corpoplast GmbH & Co. KG, 22145 Hamburg (DE)
(72) Erfinder: LINKE, Michael, D-22926 Ahrensburg (DE); BALKAU, Karl-Heinz, D-22113 Oststeinbek (DE); PREDÖHL, Willi, D-23869 Elmenhorst-Fischbek (DE)
(74) Vertreter: Klickow, Hans-Henning
(86) Internationale Anmeldenummer: DE0002593
(87) Internationale Veröffentlichungsnummer: WO01019593

(56) Entgegenhaltungen:
- EP-A- 0 481 259
- EP-A- 0 565 917
- EP-A- 0 665 093
- EP-A- 0 681 901
- EP-A- 0 693 358
- EP-A- 0 727 295
- EP-A- 0 730 941
- DE-A- 2 028 009
- FR-A- 2 659 265
- US-A- 3 829 264
- US-A- 6 099 286
- PATENT ABSTRACTS OF JAPAN vol. 1998, no. 10, 31. August 1998 (1998-08-31) & JP 10 113977 A (KYORAKU CO LTD), 6. Mai 1998 (1998-05-06)

## Beschreibung

Die Erfindung betrifft ein verfahren zur Blasformung von Behältern aus einem thermoplastischen Material, bei dem der Behälter durch Blasdruckeinwirkung aus einem temperierten Vorformling hergestellt wird und bei dem eine Behälterkontur von mindestens zwei Blasformsegmenten innerhalb einer Blasstation vorgegeben wird und bei dem die Blasformsegmente relativ zueinander durch Einwirkung eines Druckmediums auf einen Druckeinwirkungsbereich verspannbar sind.

Die Erfindung betrifft darüber hinaus eine vorrichtung zur Blasformung von Behältern aus einem thermoplastischen Material, die mindestens eine Blasstation mit mindestens einer Blasform und einer Reckstange aufweist, die aus mindestens zwei von Trägern gehalterten Blasformsegmenten ausgebildet ist und bei der mindestens eines der Blasformsegmente relativ zu seinem Träger verschieblich angeordnet ist, und bei der ein Vorspannelement mit dem verschieblichen Träger derart verbunden ist, daß nach einem Schließen der Blasstation durch Druckeinwirkung eine Verspannung der Blasformsegmente relativ zueinander vorgebbar ist sowie bei der zur Bereitstellung der Druckeinwirkung im Bereich einer Rückseite des verschieblichen Blasformsegmentes, die dem weiteren Blasformsegment abgewandt angeordnet ist, ein von einem Druckmedium beaufschlagbarer Druckeinwirkungsraum angeordnet ist, wobei der Druckeinwirkungsraum in mindestens zwei Teilräume separiert ist, die jeweils einen Druckanschluß aufweisen.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 und EP-A-565 917 beschrieben. Möglichkeiten zur Temperierung der Vorformlinge werden in der DE-OS 23 52 926 erläutert.

Eine Vorrichtung gemäß dem Oberbegriff des Anspruchs 6 ist aus der EP-A-681 901 bekannt.

Aus der EP-A-681 901 ist es bereits bekannt, im Bereich einer Blasstation zur gleichzeitigen Herstellung mehrerer Behälter in horizontaler Richtung nebeneinander räumlich von einander getrennte Druckbereiche vorzusehen, um eine Verspannung eines Blasformsegmentes relativ zu einem Träger durchzuführen. Die Druckbereiche sind im wesentlichen gleich dimensioniert und werden gleichmäßig und gleichzeitig angesteuert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei Vorrichtungen zur Verarbeitung von thermoplastischen Kunststoffen werden typischerweise Formen verwendet, die zur Gewährleistung kurzer Prozeßzyklen geeignet temperiert werden müssen. Häufig erfolgt nicht nur eine Temperierung auf ein vorgegebenes Temperaturniveau, sondern in Abhängigkeit von den jeweiligen Verfahrensschritten wird die Form zunächst beheizt und nach einer Beendigung des Einbringens beziehungsweise der Verformung des thermoplastischen Kunststoffes gekühlt, um möglichst schnell eine Formbeständigkeit des Kunststoffteiles zu erreichen.

Als Temperiermedien werden typischerweise Öle oder Wasser eingesetzt. Diese flüssigen Temperiermedien durchströmen die zu temperierenden Teile im Bereich von Temperiermittelkanälen. Ein wärmeübergang erfolgt durch einen Kontakt des Temperiermittels mit der Wandung des Temperiermittelkanales. Der Wirkungsgrad beim jeweiligen Wärmeübergang ist abhängig von der Temperaturdifferenz zwischen der Temperatur der Kanalwandung und der Temperatur des Temperiermittels in einer Umgebung der Wandung.

Bei der Konstruktion der Blasstationen müssen unterschiedliche Anforderungen erfüllt werden, bei denen jeweils bei einer Optimierung im Hinblick auf lediglich eine Anforderung negative Auswirkungen hinsichtlich der anderen Anforderungen zu erwarten sind. Einerseits wird beispielsweise ein möglichst geringes Baugewicht angestrebt, andererseits muß jedoch aufgrund der hohen Innendruckbeaufschlagung eine ausreichende Strukturfestigkeit gegeben sein. Ebenfalls muß dafür gesorgt werden, daß trotz der Innendruckeinwirkung eine ausreichend starke Zusammenpressung der Formhälften gegeneinander erfolgt, um eine Spaltbildung zu vermeiden, die bei den geblasenen Behältern eine erkennbare Naht im Außenberich verursachen würde.

Eine derartige Kompensation eines Auseinanderpressens der Formhälften durch den Innendruck durch eine zusätzliche externe Druckeinwirkung erfolgt typischerweise unter Verwendung eines Druckeinwirkungsraumes, der im Bereich einer Rückseite eines relativ zu seinem Träger verschieblichen Blasformsegmentes angeordnet ist. Die Träger der Blasformsegmente werden zunächst mechanisch miteinander verriegelt, so daß aufgrund der hierdurch gegebenen Abstützung bei einer Druckbeaufschlagung des Druckeinwirkungsraumes eine Verspannung der Blasformhälften relativ zueinander hervorgerufen wird.

Zur Anpassung an unterschiedlich große herzustellende Behälter und zur Berücksichtigung der hieraus resultierenden unterschiedlichen Kräfte aufgrund der Innendruckeinwirkung ist es bereits bekannt, den Druckeinwirkungsraum in Abhängigkeit von der jeweiligen Behältergröße mit einem unterschiedlichen Versorgungsdruck zu beaufschlagen. Nachteilig ist hierbei jedoch, daß einerseits bei unterschiedlichen Behältergrößen der Schwerpunkt der betreffenden Behälter jeweils in unterschiedlichen Bereichen der Blasstation lokalisiert ist, daß jedoch andererseits der Flächenschwerpunkt des Druckeinwirkungsraumes geometrisch konstant ist. Hierdurch wird in Abhängigkeit von der jeweiligen Behältergröße ein Verkippen der Blasformhälften relativ zueinander möglich.

Eine weitere bekannte Maßnahme besteht darin, den Druckeinwirkungsraum in die Rückseiten der verwendeten Formhälften unmittelbar zu integrieren und hierdurch eine direkte Anpassung an die jeweilige Behälterkontur vorzunehmen. Da typischerweise Blasstationen aber mit einer Mehrzahl von auswechselbaren Formsätzen betrieben werden, führt ein derartiges Vorgehen zu einem relativ hohen Aufwand, der erhöhte Kosten zur Folge hat.

Aufgabe der vorliegenden Erfindung ist es daher, ein verfahren der einleitend genannten Art derart zu verbessern, daß bei der Beaufschlagung der Formhälften mit vorspannkräften eine verbesserte Anpassung an eine jeweilige Behältergröße unterstützt wird.

Diese Aufgabe wird gemäß dem Anspruch 1 dadurch gelöst, daß der Druckeinwirkungsraum derart in mindestens zwei Teilräume separiert wird, daß mindestens einer der entsprechend der Reckrichtung hintereinander angeordneten Teilräume unabhängig von den weiteren Teilräumen vom Druckmedium beaufschlagt wird und daß eine Ansteuerung der Druckbeaufschlagung in Abhängigkeit von einer Größe der herzustellenden Behälter durchgeführt wird.

Weitere Aufgabe der vorliegenden Erfindung ist es, eine Vorrichtung der einleitend genannten Art derart zu konstruieren, daß eine verbesserte Unterdrückung einer Spaltbildung zwischen den Formhälften bei der Behälterformung unterstützt wird.

Diese Aufgabe wird gemäß dem Anspruch 6 dadurch gelöst, daß die Teilräume entsprechend der Längsrichtung der Reckstange hintereinander angeordnet sind.

Durch die Aufteilung des Druckeinwirkungsraumes in mindestens zwei Teilräume ist es möglich, den Einwirkungsbereich einer resultierenden Druckkraft in Abhängigkeit von einer jeweiligen Behältergröße zu verändern. Insbesondere ist es möglich, die resultierende Kraft möglichst nahe relativ zu einer Umgebung eines Volumenschwerpunktes des geblasenen Behälters zu lokalisieren. Hierdurch wird die Einleitung durch Drehmomenten in die Formhälften, die zu einem Verkippen der Formen führen können, vermieden beziehungsweise zumindest reduziert. Es wird hierdurch sowohl die Qualität der hergestellten Behälter als auch die Lebensdauer der Blasstation durch Entlastung der Lagerbereiche von Querkräften verbessert.

Zur Kompensation der bei der Herstellung von großen Behältern auftretenden hohen Druckkräfte wird vorgeschlagen, daß bei einer Herstellung von Behältern mit einer relativ lang dimensionierten Ausbildung alle Teilräume vom Druckmedium beaufschlagt werden.

zur Vermeidung eines Auftretens großer Kippkräfte an den Blasformhälften wird vorgeschlagen, daß bei der Herstellung von mit einer relativ geringen Länge dimensionierten Behältern mindestens derjenige der Teilräume, der einer Druckzuführung abgewandt angeordnet ist, höchstens mit einem relativ zu den anderen Teilräumen geringeren Druck beaufschlagt wird.

Ein einfacher konstruktiver Aufbau wird dadurch unterstützt, daß zur Steuerung Umschaltventile zur wahlweisen Druckzuführung oder vollständigen Druckabschaltung verwendet werden.

Eine hohe Anpassungsflexibilität kann dadurch erreicht werden, daß mindestens einer der Teilräume mit mindestens einem zwischen einer vollständigen Druckabschaltung und einer vollen Druckbeaufschlagung liegenden Teildruck beaufschlagbar ist.

Zur Unterstützung einer einfachen und zuverlässigen Abdichtbarkeit wird vorgeschlagen, daß die Teilräume gerundet begrenzt sind.

Eine schaltungstechnische Realisierung kann dadurch erfolgen, daß die Teilräume mit einem Steuerventil verbunden sind.

Ein einfacher Aufbau wird auch dadurch unterstützt, daß das Umschaltventil ein vorgebbar eine Druckzuführung zu einem der Teilräume verhinderndes Absperrelement aufweist.

Ein möglichst geringer Abstand zwischen einem Behälterschwerpunkt und einem Einwirkungspunkt einer resultierenden Vorspannungskraft wird dadurch erreicht, daß der einer Blasdruckzuführung zugewandt angeordnete Teilraum während jeden Verspannungsvorganges und bei jeder Behältergröße vom Druckmedium beaufschlagt ist.

Ein minimaler steuerungstechnischer Aufwand kann dadurch erreicht werden, daß außenseitig an der Blasstation ein manuell einstellbares Umschaltventil angeordnet ist.

In der Zeichnung sind Ausführungsbeispiele der Erfindung schematisch dargestellt. Es zeigen:
- Fig. 1:: Eine perspektivische Darstellung einer Blasstation zur Herstellung von Behältern aus Vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: eine Prinzipdarstellung einer Anordnung von zwei voneinander getrennten Druckeinwirkungsräumen relativ zu einer Mehrzahl beispielhaft eingezeichneter Flaschenkonturen
und
- Fig. 5:: eine Seitenansicht einer Blasstation mit getrennten Druckeinwirkungsräumen zur Erzeugung einer Formverspannung.

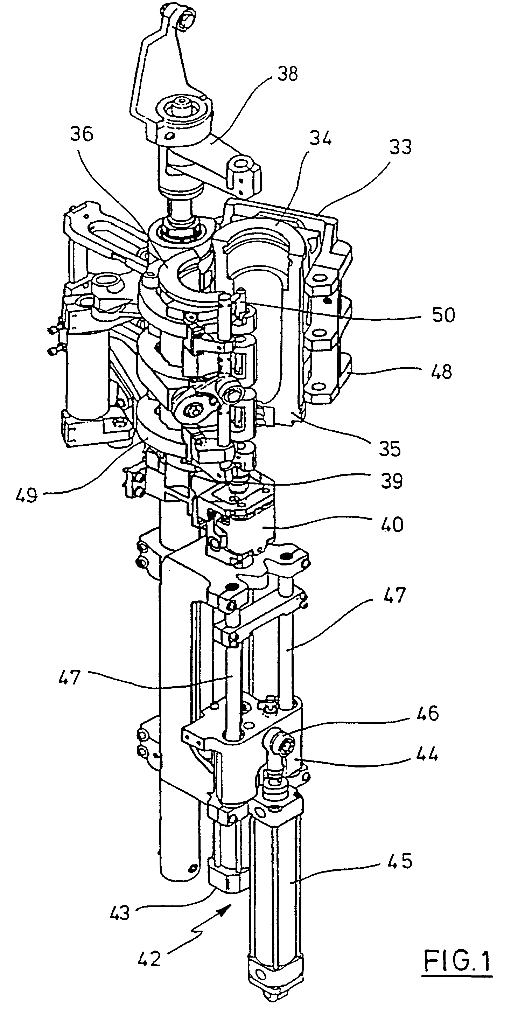

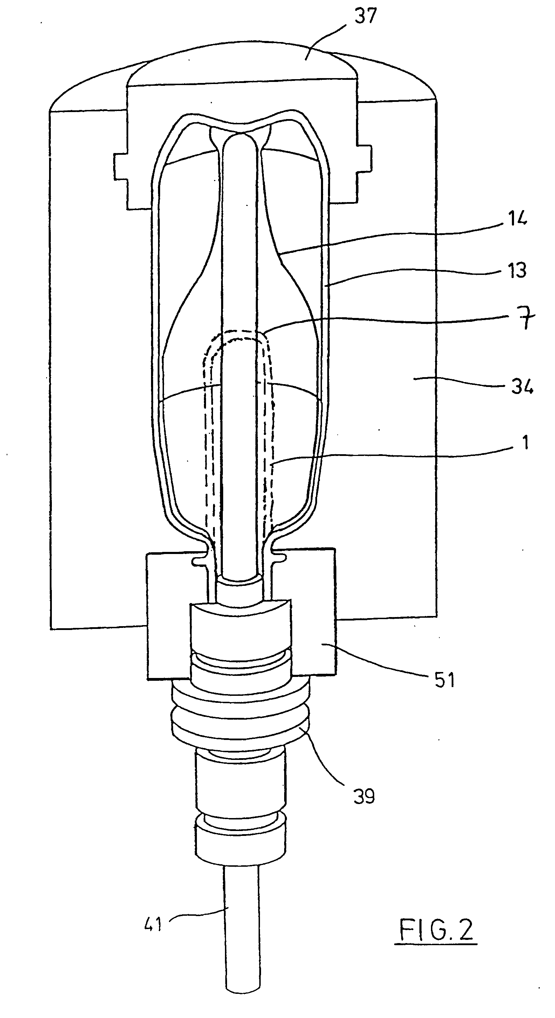

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyäthylenterephthalat sein. Zur Ermöglichung eines Einsetzens des Vorformlings (1) in die Blasform (34) und zur Ermöglichung eines Herausnehmens des fertigen Behälters besteht die Blasform (34) aus Formhälften (35,36) und einem Bodenteil (37), der von einer Hubvorrichtung (38) positionierbar ist. Der Vorformling (1) kann im Bereich der Blasstation (33) von einem Transportdorn (39) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Transportdornes (39) ein Anschlußkolben (40) angeordnet, der dem Vorformling (1) Druckluft zuführt und gleichzeitig eine Abdichtung relativ zum Transportdorn (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich des Bodens (7) des Vorformlings (1) gefahren. Während des eigentlichen Reckvorganges wird der Primärzylinder (43) mit ausgefahrener Reckstange gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine aktuelle Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48,49) angeordneten Formhälften (35,36) erfolgt eine Verriegelung der Träger (48) relativ zueinander mit Hilfe einer Verriegelungseinrichtung (50).

Zur Anpassung an unterschiedliche Formen des Mündungsabschnittes (2) ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

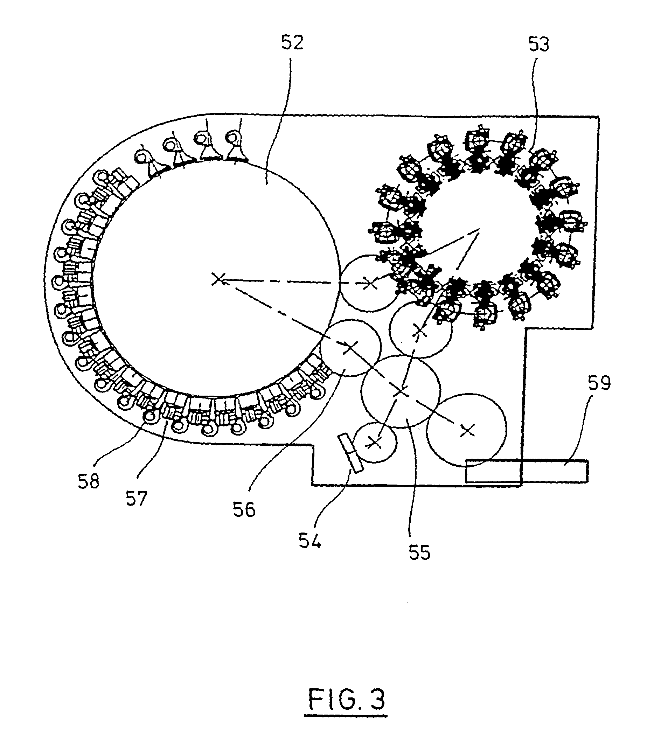

Fig. 3 zeigt den grundsätzlichen Aufbau einer Blasmaschine, die mit einem rotierenden Heizrad (52) sowie einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind Heizstrahler (57) sowie Gebläse (58) angeordnet, um die Vorformlinge (1) zu temperieren. Nach einer ausreichenden Temperierung der Vorformlinge (1) werden diese an das Blasrad (53) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

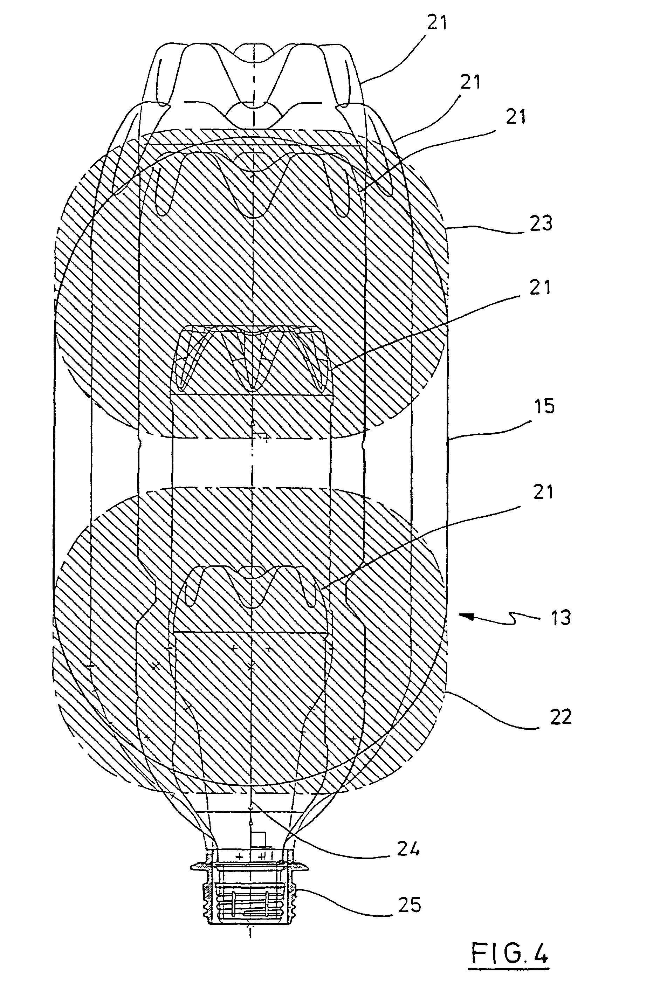

Fig. 4 zeigt beispielhaft eine Mehrzahl von Außenkonturen (21) von Behältern (13) unterschiedlicher Größe sowie die relative Anordnung zu diesen Außenkonturen eines konventionellen einteiligen Druckeinwirkungsraumes (15) und von Teilräumen (22, 23), die bei der dargestellten Ausführungsform in einer Längsrichtung (24) des Behälters (13) hintereinander angeordnet sind. Der Teilraum (22) ist dabei relativ dicht in der Nähe eines Mündungsbereiches (25) des Behälters (13) und der Teilbereich (23) mit einem größeren Abstand zu diesem Mündungsbereich (25) angeordnet.

Bei einer blastechnischen Herstellung von Behältern einer relativ großen Länge werden beide Teilräume (22, 23) mit dem vorgesehenen Druckmedium beaufschlagt, um die Verspannung der Formhälften (35, 36) relativ zueinander durchzuführen. Bei einer Herstellung relativ kleiner Behälter wird lediglich der dem Mündungsbereich (25) zugewandt angeordnete Teilraum (22) mit dem Druckmedium beaufschlagt.

Eine Ansteuerung der Teilräume (22, 23) kann in unterschiedlichen Varianten erfolgen. Schaltungstechnisch am einfachsten ist es, lediglich eine Zuschaltbarkeit des Teilraumes (23) vorzusehen und entweder den Teilraum (22) oder beide Teilräume (22, 23) mit dem Druckmedium unter einem konstanten Druck zu beaufschlagen. Grundsätzlich ist es aber ebenfalls denkbar, eine zusätzliche Ansteuerbarkeit der Teilräume (22, 23) bezüglich der Intensität des Druckes vorzusehen. Bei einer derartigen Ansteuerung könnte vor einer vollständigen Abschaltung des Teilraumes (23) beispielsweise zunächst in Abhängigkeit von der jeweiligen Flaschengröße eine Druckbeaufschlagung dieses Teilraumes (23) mit einem relativ zum Teilraum (22) geringeren Druck erfolgen. Ebenfalls ist es denkbar, bei der Herstellung von Behältern (13), die zwar relativ lang, dafür aber mit geringerem Durchmesser ausgebildet sind, eine Beaufschlagung beider Teilräume (22, 23) mit reduzierten Drücken zu realisieren.

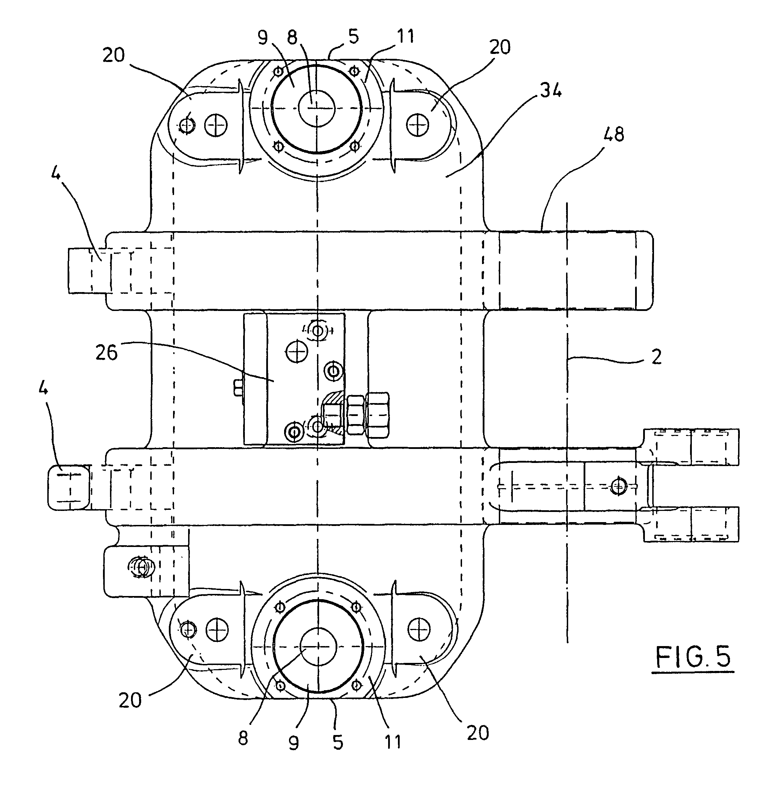

Fig. 5 zeigt in einer Seitenansicht eine von einem Träger (48) gehalterte Blasformhälfte (34). Außenseitig ist bei dieser Ausführungsform ein Umschaltventil (26) vorgesehen, das eine manuelle Abschaltung des Teilraumes (22) ermöglicht. Bei dieser konstruktiv äußerst einfachen Ausführungsform besitzen die beiden Teilräume (22, 23) eine gemeinsame Druckzuführung. Der Teilraum (22) wird bei jeder Aktivierung der Vorspannungskraft mit dem Druckmedium beaufschlagt. Über das Umschaltventil (26) kann vorgegeben werden, ob zusätzlich zum Teilraum (22) auch der Teilraum (23) mit dem Druckmedium beaufschlagt werden soll. Diese Ausführungsform hat den Vorteil, daß sehr geringe zusätzliche Kosten entstehen und daß bei der ohnehin manuell durchgeführten Umrüstung der Blasstation (33) zur Montage unterschiedlicher Sätze von Formhälften (35, 36) bedarfsabhängig eine Schaltpositionierung des Umschaltventil (26) durchgeführt wird.

Die Träger (48, 49) sind gemeinsam mit den Formhälften (35, 36) verschwenkbar relativ zu einer Drehachse (2) angeordnet. Die Verriegelungseinrichtung (50) greift in Verriegelungsbuchsen (4) ein. Zur Positionierung der verschieblichen Formhälfte (34) ohne Beaufschlagung der Teilräume (22, 23) mit dem Druckmedium sind Federelemente (20) vorgesehen. Eine Führung der Formhälften (35, 36) relativ zu den Trägern (48, 49) erfolgt mit Hilfe von Führungselementen (5). Die Führunsgelemente (5) sind über Außenflansche (11) an den Trägern (48, 49) befestigt und bestehen im wesentlichen aus einem harten Kern (8), daß in ein Elastomer (9) eingebettet ist.

Fig. 5 zeigt speziell die räumliche Anordnung von zwei Führungselementen (5) und vier Federelementen (20) relativ zueinander. Es ist erkennbar, daß eine relativ zu einer Mittellinie symmetrische Anordnung der Bauelemente realisiert ist. Insbesondere sind die Federelemente (20) und die Führungselemente (5) auch außerhalb der Teilräume (22, 23) angeordnet.

## Patentansprüche

1. Verfahren zur Blasformung von Behältern (13) aus einem thermoplastischen Material, bei dem der Behälter (13) durch Blasdruckeinwirkung aus einem temperierten Vorformling (1) hergestellt wird und bei dem eine Behälterkontur von mindestens zwei Blasformsegmenten innerhalb einer Blasstation (33) vorgegeben wird und bei dem die Blasformsegmente relativ zueinander durch Einwirkung eines Druckmediums auf einen Druckeinwirkungsraum (13) verspannbar sind, **dadurch gekennzeichnet, daß** der Druckeinwirkungsraum (15) derart in mindestens zwei entsprechend einer Reckrichtung hintereinander angeordnete Teilräume (22, 23) separiert wird, daß mindestens einer der Teilräume (22, 23) unabhängig von den weiteren Teilräumen (22, 23) vom Druckmedium beaufschlagt wird und daß eine Ansteuerung der Druckbeaufschlagung in Abhängigkeit von einer Größe der herzustellenden Behälter (13) durchgeführt wird.

2. Verfahren nach Anspruch 1, **dadurch gekennzeichnet, daß** bei einer Herstellung von Behältern (13) mit einer relativ lang dimensionierten Ausbildung alle Teilräume (22, 23) vom Druckmedium beaufschlagt werden.

3. Verfahren nach Anspruch 1 oder 2, **dadurch gekennzeichnet, daß** bei der Herstellung von mit einer relativ geringen Länge dimensionierten Behältern (13) mindestens derjenige der Teilräume (22, 23), der einer Druckzuführung abgewandt angeordnet ist, höchstens mit einem relativ zu den anderen Teilräumen (22, 23) geringeren Druck beaufschlagt wird.

4. Verfahren nach einem der Ansprüche 1 bis 3, **dadurch gekennzeichnet, daß** zur Steuerung Umschaltventile zur wahlweisen Druckzuführung oder vollständigen Druckabschaltung verwendet werden.

5. Verfahren nach einem der Ansprüche 1 bis 3, **dadurch gekennzeichnet, daß** mindestens einer der Teilräume (22, 23) mit mindestens einem zwischen einer vollständigen Druckabschaltung und einer vollen Druckbeaufschlagung liegenden Teildruck beaufschlagt wird.

6. Vorrichtung zur Blasformung von Behältern (13) aus einem thermoplastischen Material, die mindestens eine Blasstation, (33) mit mindestens einer Blasform (34) und einer Reckstange (41) aufweist, die aus mindestens zwei von Trägern (48, 49) gehalterten Blasformsegmenten ausgebildet ist und bei der mindestens eines der Blasformsegmente relativ zu seinem Träger (48, 49) verschieblich angeordnet ist, und bei der ein Vorspannelement mit dem verschieblichen Träger (48, 49) derart verbunden ist, daß nach einem Schließen der Blasstation (33) durch Druckeinwirkung eine Verspannung der Blasformsegmente relativ zueinander vorgebbar ist sowie bei der zur Bereitstellung der Druckeinwirkung im Bereich einer Rückseite des verschieblichen Blasformsegmentes, die dem weiteren Blasformsegment abgewandt angeordnet ist, ein von einem Druckmedium beaufschlagbarer Druckeinwirkungsraum (15) angeordnet ist, wobei der Druckeinwirkungsraum (15) in mindestens zwei Teilräume (22, 23) separiert ist, die jeweils einen Druckanschluß aufweisen, **dadurch gekennzeichnet, daß** die Teilräume (22, 23) entsprechend der Längsrichtung der Reckstange (41) hintereinander angeordnet sind.

7. Vorrichtung nach Anspruch 6, **dadurch gekennzeichnet, daß** die Teilräume (22, 23) gerundet begrenzt sind.

8. Vorrichtung nach einem der Ansprüche 6 oder 7, **dadurch gekennzeichnet, daß** die Teilräume (22, 23) mit einem Umschaltventil (26) verbunden sind.

9. Vorrichtung nach Anspruch 8, **dadurch gekennzeichnet, daß** das Umschaltventil (26) ein vorgebbar eine Druckzuführung zu einem der Teilräume (22, 23) verhinderndes Absperrelement aufweist.

10. Vorrichtung nach einem der Ansprüche 6 bis 9, **dadurch gekennzeichnet, daß** der einer Blasdruckzuführung zugewandt angeordnete Teilraum (22, 23) während jeden Verspannungsvorganges und bei jeder Behältergröße mit einer Versorgungseinrichtung für das Druckmedium verbindbar ist.

11. Vorrichtung nach einem der Ansprüche 6 bis 10, **dadurch gekennzeichnet, daß** außenseitig an der Blasstation (33) ein manuell einstellbares Umschaltventil (26) angeordnet ist.

## Claims

1. A process for blow moulding containers (13) from a thermoplastic material, in which the container (13) is made by the action of blowing pressure from a parison (1) brought to the correct temperature, and in which a container contour is predetermined by at least two blowing mould segments within a blowing station (33), and in which the blowing mould segments may be clamped relative to one another by the action of a pressurised medium against a space (13) for the action of pressure, **characterised in that** the space (15) for the action of pressure is separated into at least two part spaces (22, 23) arranged one behind the other in accordance with a direction of stretching in such a way that at least one of the part spaces (22, 23) is urged by the pressurised medium, independently of the further part spaces (22, 23), and **in that** the urging by pressure is triggered in dependence on a magnitude of the containers (13) to be made.

2. A process according to Claim 1, **characterised in that**, when containers (13) having a construction of relatively long dimensions are made, all the part spaces (22, 23) are urged by the pressurised medium.

3. A process according to Claim 1 or 2, **characterised in that**, when containers (13) which are dimensioned to be relatively small in length are made, at least that one of the part spaces (22, 23) which is arranged remote from a pressure supply is urged at most by a smaller pressure relative to the other part spaces (22, 23).

4. A process according to one of Claims 1 to 3, **characterised in that**, for the purpose of control, switchover valves are used to selectively supply pressure or to completely switch off the pressure.

5. A process according to one of Claims 1 to 3, **characterised in that** at least one of the part spaces (22, 23) is urged by at least one partial pressure lying between completely switched-off pressure and full urging by pressure.

6. A device for blow moulding containers (13) from a thermoplastic material, which has at least one blowing station (33) having at least one blowing mould (34) and a stretching rod (41), this blowing mould (34) being constructed from at least two blowing mould segments held by carriers (48, 49), and in which at least one of the blowing mould segments is arranged displaceably in relation to its carrier (48, 49), and in which a pre-clamping element is connected to the displaceable carrier (48, 49) such that once the blowing station (33) has been closed by the action of pressure a clamping of the blowing mould segments relative to one another is predeterminable, and in which, in order to provide the action of pressure, there is arranged in the region of a rear side of the displaceable blowing mould segment that is arranged remote from the further blowing mould segment a space (15) for the action of pressure which is capable of being urged by a pressurised medium, with the space (15) for the action of pressure being separated into at least two part spaces (22, 23) which each have a pressure connection point, **characterised in that** the part spaces (22, 23) are arranged one behind the other in accordance with the longitudinal direction of the stretching rod (41).

7. A device according to Claim 6, **characterised in that** the part spaces (22, 23) are delimited in rounded manner.

8. A device according to either of Claims 6 or 7, **characterised in that** the part spaces (22, 23) are connected to a switchover valve (26).

9. A device according to Claim 8, **characterised in that** the switchover valve (26) has a blocking element which prevents the supply of pressure to one of the part spaces (22, 23) in predeterminable manner.

10. A device according to one of Claims 6 to 9, **characterised in that** the part space (22, 23) arranged facing a blowing pressure supply is connectable to a supply device for the pressurised medium during each clamping procedure and with any container magnitude.

11. A device according to one of Claims 6 to 10, **characterised in that** on the outside of the blowing station (33) there is arranged a manually adjustable switchover valve (26).

## Revendications

1. Procédé de moulage par soufflage de récipients (13) en un matériau thermoplastique, où le récipient (13) est préparé à partir d'un préformé (1) tempéré par action de la pression de soufflage et où un contour du récipient est donné par au moins deux segments de moule de soufflage dans une station de soufflage (33) et où les segments de moule de soufflage sont contractables l'un par rapport à l'autre par l'action d'une pression intermédiaire sur une enceinte d'action de pression (15), **caractérisée en ce que** l'enceinte d'action de pression (15) est séparée en au moins deux enceintes partielles (22, 23) correspondant à une direction d'étirage et disposées l'une après l'autre, **en ce qu'**au moins une des enceintes partielles (22, 23) est exposée à une pression intermédiaire indépendamment des autres enceintes partielles (22, 23), et **en ce que** le réglage de l'exposition à la pression dépend de la taille des récipients (13) à préparer.

2. Procédé selon la revendication 1, **caractérisé en ce que** lors de la préparation des récipients (13) avec des dimensions relativement longues, toutes les enceintes partielles (22, 23) sont exposées à la pression intermédiaire.

3. Procédé selon la revendication 1 ou 2, **caractérisé en ce que** lors de la préparation de récipients (13) avec des dimensions relativement courtes, au moins l'enceinte partielle (22, 23), qui est disposée de façon détourné de l'alimentation de pression, est exposée au maximum à une pression plus faible par rapport aux autres enceintes partielles (22, 23).

4. Procédé selon l'une quelconque des revendications 1 à 3, **caractérisé en ce qu'**on utilise des soupapes d'inversion (26) pour le réglage de l'alimentation de pression ou de l'arrêt de pression, au choix.

5. Procédé selon l'une quelconque des revendications 1 à 3, **caractérisé en ce qu'**au moins une des enceintes partielles (22, 23) est exposée à une pression partielle se situant au moins entre un arrêt complet de pression et une exposition complète à la pression.

6. Dispositif de moulage par soufflage de récipients (13) en un matériau thermoplastique, qui présente au moins une station de soufflage (33) avec au moins un moule de soufflage (34) et une hampe d'étirage (41), qui est composé d'au moins deux segments de moule de soufflage fixés par des supports (48, 49), et où au moins un des segments de moule de soufflage est disposé de façon déplaçable par rapport à son support (48, 49), et où un élément de tension est relié au support déplaçable (48, 49) de sorte qu'après une fermeture de la station de soufflage (33) par un action de pression, une tension des segments de moule de soufflage l'un par rapport à l'autre peut être fixé d'avance, et lors de la mise à disposition de l'action de pression au niveau du verso du segment de moule de soufflage deplaçable, disposé de façon détournée par rapport à l'autre segment de moule de soufflage, une enceinte d'action de pression (15) qui peut être exposée à une pression intermédiaire, où l'enceinte d'action de pression (15) est séparée en au moins deux enceintes partielles (22, 23), présentant chacune un raccordement à la pression, **caractérisé en ce que** les enceintes partielles (22, 23) sont disposées l'une après l'autre correspondant à la direction longitudinale de la hampe d'étirage (41).

7. Dispositif selon la revendication 6, **caractérisé en ce que** les enceintes partielles (22, 23) sont arrondies.

8. Dispositif selon l'une quelconque des revendications 6 ou 7, **caractérisé en ce que** les enceintes partielles (22, 23) sont reliées à une soupape d'inversion (26).

9. Dispositif selon la revendication 8, **caractérisé en ce que** la soupape d'inversion (26) présente un élément de fermeture, empêchant une alimentation de pression réglable vers une des enceintes partielles (22, 23).

10. Dispositif selon l'une quelconque des revendications 6 à 9, **caractérisé en ce que** l'enceinte partielle (22, 23), tournée vers une alimentation de pression, peut être reliée, pendant chaque procédé de contraction et pour chaque taille de récipient, à un dispositif d'alimentation pour la pression intermédiaire.

11. Dispositif selon l'une quelconque des revendications 6 à 10, **caractérisé en ce que** l'extérieur de la station de soufflage (33) présente une soupape d'inversion (26) manuellement réglable.
